# EUROPEAN PATENT APPLICATION

(11) **EP 4 671 308 A1**
(43) Date of publication of application: **31.12.2025**
(21) Application number: 24184894.4
(22) Date of filing: 27.06.2024
(51) Int. Cl.: C08G 73/16, C08J 5/18, C09D 179/08

(54) **LOW DIELECTRIC POLYESTER-IMIDE**

(71) Applicant: Syensqo Specialty Polymers USA, LLC, Alpharetta GA 30005-3914 (US)
(72) Inventor: POWELL, Chad, Alpharetta (US); JOEL, Stéphane, Saint-Fons (FR); BOCAHUT, Anthony, Saint-Fons (FR); LAHARY, Pierre Yves, Saint-Fons (FR)
(74) Representative: Senninger, Thierry

(57) **Abstract**

The invention relates to a polymer (PEI) comprising at least 90.0 mol%, preferably at least 95.0 mol%, this proportion in mol% being relative to the total number of recurring units in the polymer, of recurring units (R_{PEI}), formed by reaction of the dianhydrides of the dianhydride component (a) and of the diamines of the diamine component (b) followed by imidization, where the dianhydride component (a) consists essentially of or consists of between 68.0 mol% and 82.0 mol% of the dianhydride (DI1) of formula 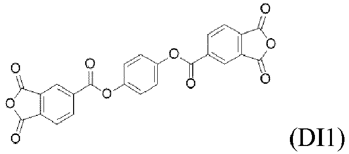 and between 18.0 mol% and 32.0 mol% of dianhydride (DI2) selected in the group consisting of the dianhydride (DI2a), dianhydride (DI2b) and a combination thereof: 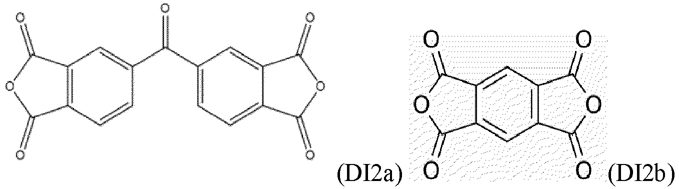 where these proportions in mol% are given relative to the total proportion dianhydrides in the dianhydride component (a); and the diamine component (b) consists essentially of or consists of between 68.0 mol% and 100 mol% diamine (DA1) of formula 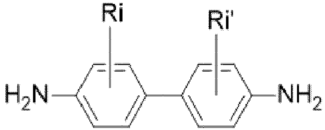 where R is a substituent selected in the groups of C₁-C₁₀ alkyl groups and i an i' are integers between 0 and 4 such that i+i' is at least 2 and between 0 and 32.0 mol% of diamine (DA2) of formula 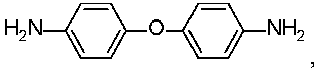 where these proportions in mol% are given relative to the total proportion diamines in the diamine component (b).

## Description

### [FIELD OF THE INVENTION]

The invention relates to a new polymer exhibiting a high glass transition temperature, low dielectric constant, and a low dissipation factor, and uses thereof. The present disclosure further relates to a composition comprising the polymer.

### BACKGROUND OF THE INVENTION

High Performance Polymers 2006,18, 697-717 "Poly(ester imide)s Possessing Low Coefficient of Thermal Expansion and Low Water Absorption" (DOI 10.1177/0954008306068231) discloses poly(ester-imide)s based on the dianhydride TAHQ of formula: 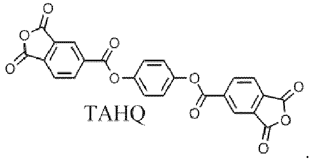 The polymers disclosed have a different chemical composition from the poly(ester-imide) of the invention.

US 3,407,176 discloses a polymeric-polyamide-acid.

US 2022/0306807 discloses a polymer formed from the following monomers: 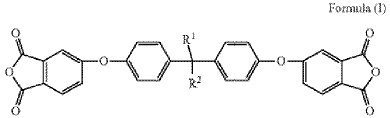 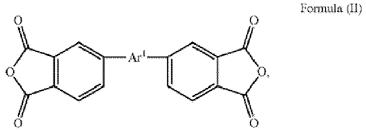 where Ar¹ is 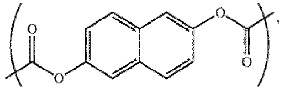 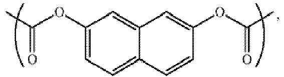 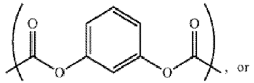 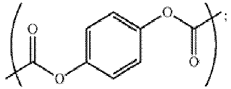 The dianhydride component (a) of claim 1 is different.

US 2022/169792 discloses a copper-clad laminate comprising a polyimide of generic formula: 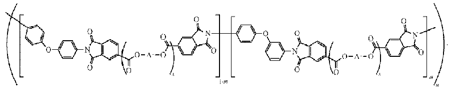 where Ar is the divalent radical derived from an aromatic group. US 2022/0056213 discloses a copper-clad laminate comprising a polymer of generic formula: 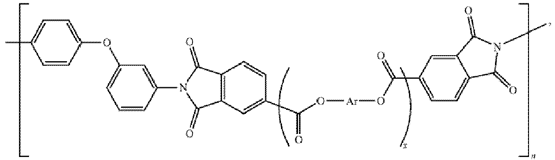 There is no disclosure of the 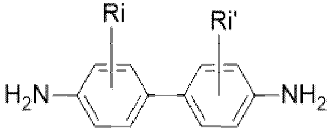 monomer of formula

TW 2023/11361 discloses the following polymer: 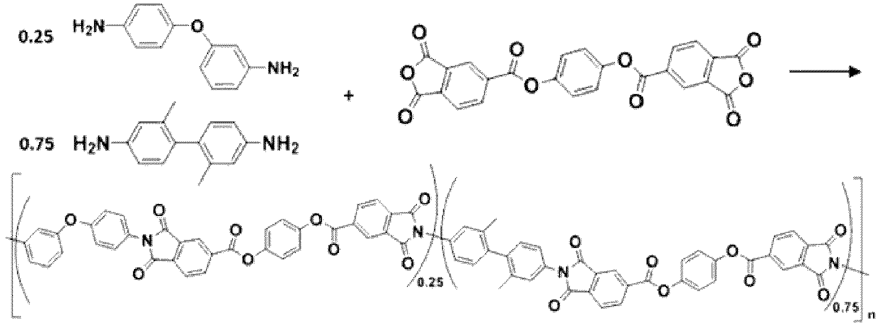 There is no disclosure of the polymer of claim 1.

US 2003/0194573 discloses a multilayer structure, comprising a conductor layer, an adhesive layer, and a polymer film layer interposed between the conductor layer and the adhesive layer.

JP 2024/76181 discloses polyimides but are based on the use of 1,3-bis(3-aminophenoxy)benzene, 1,4-bis(4-aminophenoxy)benzene (hereinafter sometimes referred to as TPE-Q) or 1,3-bis(4-aminophenoxy)benzene (hereinafter sometimes referred to as TPE-R).

None of these documents disclose the polymer of claim 1.

### [TECHNICAL PROBLEM]

Due to their reduced weight and high mechanical performance, polymer compositions in the form of films are widely used to manufacture mobile electronic device components, in particular printed circuit boards. The development of 5G applications for printed circuit boards has notably led to new requirements for the material dielectric constant and low tangent (Df): Dk < 4.0 and Df < 0.004. The polymer used in said polymer composition therefore needs to exhibit a low dielectric constant Dk and a low dissipation factor Df.

For some technologies such as surface mounting technology (or SMT), the film needs to exhibit also thermal resistance and a high glass transition temperature (Tg), notably higher than 280°C. A lower melting temperature (Tm) or the non-observance of a Tm is also believed to eliminate the crystallinity and to relieve the stress in the film.

In addition, the polymer needs also to be readily made into a film form by solution casting.

The invention aims at solving this technical problem.

### [DEFINITIONS]

These definitions apply to the present disclosure.

wt.% is a percentage by weight. Mol.% is a percentage by mole.

Unless otherwise stated, the proportions of recurring units in the polymer are given in mol% and relative to the total proportion of recurring units in the polyamide.

When numerical ranges are given herein, unless otherwise indicated, the end-points of the ranges (even the open-ended ranges such as those comprising *"at least", "at most", "lower than",* etc) are included.

In the present application, unless otherwise indicated, any specific embodiment or technical feature relating to one of the subject-matters of the invention is applicable to and interchangeable with another embodiment or technical feature relating also to said subject matter and disclosed elsewhere in the application.

A dianhydride is an organic molecule containing only two anhydride groups.

The term *"poly(ester-imide)* " designates a polymer which comprises in its backbone recurring units linked together by imide and ester groups.

### [BRIEF DISCLOSURE OF THE INVENTION]

The invention is set out in the appended set of claims.

The invention relates to a polymer as defined in any one of claims 1-11.

The invention relates also to a polymer composition (PC) as defined in claim 12 or 13.

The invention relates also to a metal clad laminate (MCL) as defined in claim 14.

The invention relates also to the use as defined in claim 15.

More precisions and details about the invention are now provided below.

### [DETAILED DESCRIPTION OF THE INVENTION]

The invention relates to a polymer (PEI) comprising at least 90.0 mol%, preferably at least 95.0 mol%, this proportion in mol% being relative to the total number of recurring units in the polymer, of recurring units (R_{PEI}), formed by reaction of the dianhydrides of the dianhydride component (a) and of the diamines of the diamine component (b) followed by imidization, where
- the dianhydride component (a) consists essentially of or consists of between 28.0 mol% and 82.0 mol% of the dianhydride (DI1) of formula 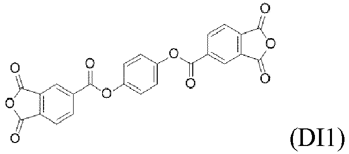 and between 18.0 mol% and 72.0 mol% of dianhydride (DI2) selected in the group consisting of the dianhydride (DI2a), dianhydride (DI2b) and a combination thereof: 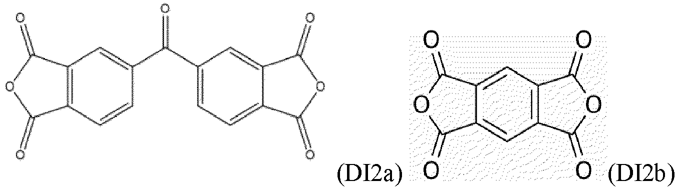 these proportions in mol% being given relative to the total proportion dianhydrides in the dianhydride component (a); and
- the diamine component (b) consists essentially of or consists of between 68.0 mol% and 100 mol% of diamine (DA1) of formula 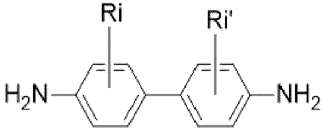 where
R is a substituent selected in the groups of C₁-C₁₀ alkyl groups and i an i' are integers between 0 and 4 such that i+i' is at least 2 and between 0 and 32.0 mol% of diamine (DA2) of formula 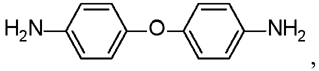 these proportions in mol% being given relative to the total proportion diamines in the diamine component (b).

The invention also relates to a polymer (PEI) comprising at least 90.0 mol%, preferably at least 95.0 mol%, this proportion in mol% being relative to the total number of recurring units in the polymer, of recurring units (R_{PEI}), formed by reaction of the dianhydrides of the dianhydride component (a) and of the diamines of the diamine component (b) followed by imidization, where
- the dianhydride component (a) consists essentially of or consists of between 68.0 mol% and 82.0 mol% of the dianhydride (DI1) of formula 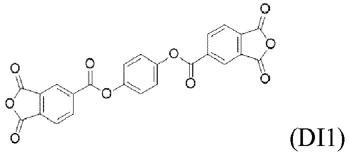 and between 18.0 mol% and 32.0 mol% of dianhydride (DI2) selected in the group consisting of the dianhydride (DI2a), dianhydride (DI2b) and a combination thereof: 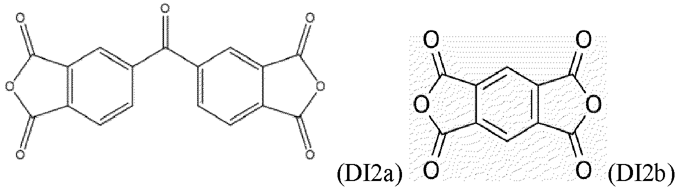 these proportions in mol% being given relative to the total proportion dianhydrides in the dianhydride component (a); and
- the diamine component (b) consists essentially of or consists of between 68.0 mol% and 100 mol% of diamine (DA1) of formula 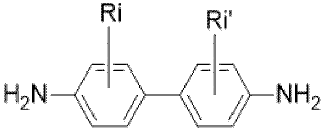 where
R is a substituent selected in the groups of C₁-C₁₀ alkyl groups and i an i' are integers between 0 and 4 such that i+i' is at least 2 and between 0 and 32.0 mol% of diamine (DA2) of formula 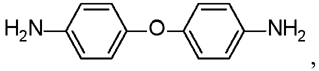 these proportions in mol% being given relative to the total proportion diamines in the diamine component (b).

Recurring units (R_{PEI}) are formed by the reaction of the dianhydrides of the dianhydride component (a) and of the diamines of the diamine component (b) followed by imidization. The imidization leads to the formation of imide groups in the backbone of the polymer (PEI). As polymer (PEI) comprises also ester groups in its backbone (stemming from DI1), polymer (PEI) can be also referred to as a polyester-imide).

The imidization is typically performed by heating a poly(amic acid), which is a precursor of polymer (PEI). A poly(amic acid) is a polymer containing the following group in the recurring units: 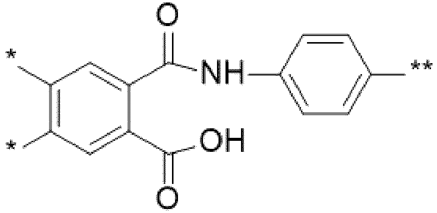 where * represents a C(=O) group or hydrogen atom stemming from dianhydride DI1 or DI2 and ** represents the rest of diamine DA1 or DA2 (being understood that the phenyl ring represented here can be substituted by substituent R if phenyl ring stems from diamine DA1).

More details are now provided about the dianhydride component (a) and diamine component (b).

### Dianhydride component (a)

The dianhydride component (a) consists essentially of or consists of between 28.0 mol% and 82.0 mol% of dianhydride (DI1) and between 18.0 mol% and 72.0 mol% of dianhydride (DI2). The expression *"consist essentially"* in relation to the dianhydride component (a) means that the dianhydride component consists of dianhydrides DI1 and DI2 and may also contain a dianhydride other than DI1 and DI2 with a proportion lower than or equal to 1.0 mol% (<_ 1.0 mol%).

One component of the dianhydride component (a) is dianhydride (DI1) of formula: 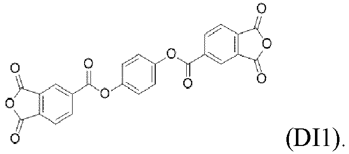 Molecule: CAS 2770-49-2 aka TAHQ.

The dianhydride component (a) also comprises a dianhydride (DI2) selected in the group consisting of the dianhydride (DI2a), dianhydride (DI2b) and a combination thereof: 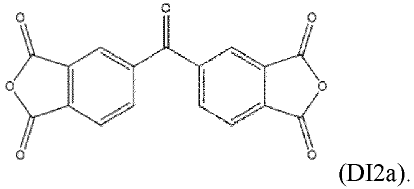 Molecule: CAS 2421-28-5 - benzophenone tetracarboxylic dianhydride (BTDA) 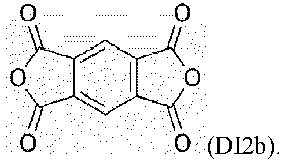 Molecule: CAS N°89-32-7 - pyromellitic dianhydride (PMDA)

The dianhydride component (a) can comprise either DI2a or DI2b or even the combination DI2a and DI2b. For the combination of the two dianhydrides DI2a and DI2b, the molar ratio DI2a/DI2b is preferably between 1:1 and 5:1, more preferably between 1:1 and 4.5:1.

### Diamine component (b)

The diamine component (b) consists essentially of or consists of between 68.0 mol% and 100 mol% of diamine (DA1) and between 0 and 32.0 mol% of diamine (DA2). The expression *"consist essentially"* in relation to the diamine component (b) means that the diamine component consists of DA1 and DA2 and may also contain a diamine other than DA1 and DA2 with a proportion lower than or equal to 2.0 mol%, preferably lower than or equal to 1.5 mol% (<_ 1.5 mol%), preferably lower than or equal to 1.0 mol% (<_ 1.0 mol%), preferably lower than or equal to 0.5 mol% (<_ 0.5 mol%).

The diamine component (b) may more particularly consist essentially of or consist of diamine (DA1), where the expression *"consist essentially"* in relation to the diamine component (b) means that the diamine component consists of DA1 and may also contain a diamine other than DA1 with a proportion lower than or equal to 2.0 mol%, preferably lower than or equal to 1.5 mol% (<_ 1.5 mol%), preferably lower than or equal to 1.0 mol% (<_ 1.0 mol%), preferably lower than or equal to 0.5 mol% (<_ 0.5 mol%).

DA1 is of formula 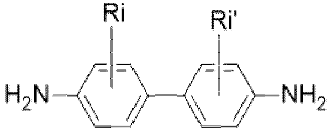 where R is a substituent selected in the groups of C₁-C₁₀ alkyl groups and i an i' are integers between 0 and 4 such that i+i' is at least 2.

More particularly, R is a substituent selected in the group of C₁-C₃ linear or branched alkyl groups.

R may more particularly be selected in the group consisting of methyl, ethyl and propyl and isomers thereof.

According to a preferred embodiment, i and i' are both integers between 1 and 4.

According to another preferred embodiment, i=i'=1.

DA1 may more particularly be of formula:

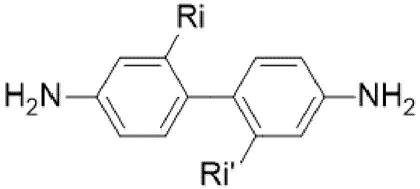

DA1 is preferably of formula:

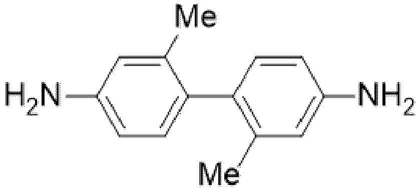

DA2 is 4,4'-oxydianiline *aka* 4,4'-ODA (CAS N°101-80-4).

Polymer (PEI) comprises the following recurring units (R_{PEI 1}), (R_{PEI 2}), (R_{PEI 3}) and (R_{PEI 4}) which are linked to one another by the imide bonds:
- 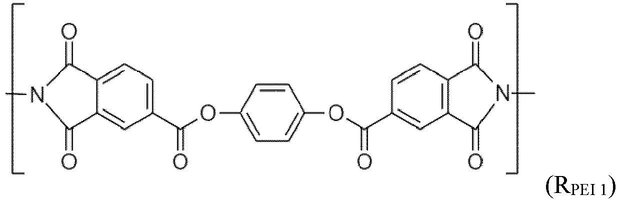
- (R_{PEI 2}) selected in the group consisting of the units of formula (R_{PEI 2a}) with X= C(=O), (R_{PEI 2b}) and combination thereof; 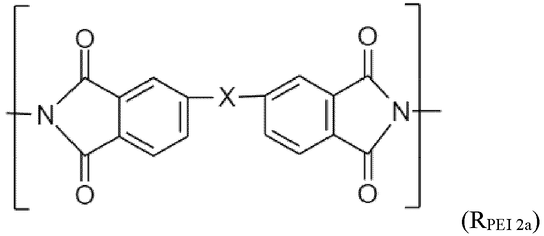 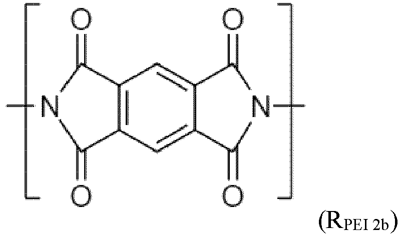
- 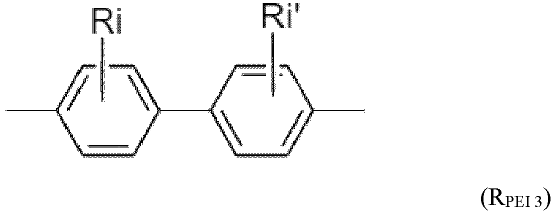
-

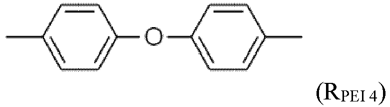

The skilled person understands that units (R_{PEI 1}) derive from the reaction of dianhydride DI1 and a diamine followed by imidization and that units (R_{PEI 2}) derive from the reaction of dianhydride DI2 and a diamine followed by imidization. Units (R_{PEI 3}) and (R_{PEI 4}) derive from respectively diamines DA1 and DA2.

(R_{PEI 3}) may more particularly be a recurring unit derived from the specific monomers disclosed in § [0044] or [0045] above.

The total proportion of recurring units (R_{PEI 1}), (R_{PEI 2}), (R_{PEI 3}) and (R_{PEI 4}) in polymer (PEI) is at least 90.0 mol%, preferably at least 95.0 mol%, this proportion in mol% being relative to the total number of recurring units in the polymer.

According to an embodiment, the recurring units of polymer (PEI) of the invention consist essentially of or consist of recurring units (R_{PEI 1}), (R_{PEI 2}), (R_{PEI 3}) and (R_{PEI 4}).

### Thermal properties of the polymer (PEI)

The polymer (PEI) of the invention exhibits a combination of interesting thermal properties.

The polymer (PEI) may be semi-crystalline or amorphous. The term *"amorphous"* designates a polymer that does not contain a melting endotherm nor on the first heating cycle or on the second heating cycle of the DSC protocol as provided below. In certain embodiments, polymer (PEI) may exhibit an endotherm, as measured by Differential Scanning Calorimetry (DSC) according to ASTM D3418, on the first heating. The polymer (PEI) is considered to be semi-crystalline if an endotherm is observed on the first heating cycle of a DSC scan and an exotherm is observed on the subsequent cooling scan. In the event that no exotherm is present, the polymer (PEI) is considered to be amorphous.

### Glass transition temperature (Tg)

The polymer (PEI) exhibits a Tg of at least 280.0°C.

Tg may be between 280.0°C and 380.0°C or between 280.0°C and 350.0°C.

Tg is measured by dynamic mechanical analysis ("DMA") according to ASTM E1640-23, notably using a heating and cooling rate of 10°C/min, at a frequency of 10 Hz, with an oscillatory strain of 0.1 %.

Tg can more particularly be measured pursuant to protocol (p1) described in the Experimental Section.

### Dielectric properties of polymer (PEI)

Polymer (PEI) of the invention exhibits a combination of interesting dielectric properties, notably a low dielectric constant Dk and a low dissipation factor Df in the GHz frequency.

According to an embodiment (E), polymer (PEI) exhibits the following dielectric properties:
- Dk at 20 GHz ≤ 4.0, Dk being measured on a film made of polymer (PEI) after drying in an oven at 100°C for 1 hour. In the same conditions, Dk is preferably ≤ 3.7, preferably ≤ 3.5; and/or
- Df at 20 GHz ≤ 0.0040, Df being measured on a film made of the polymer (PEI) after drying in an oven at 100°C for 1 hour. In the same conditions, Df is preferably ≤ 0.0036.

These dielectric properties are adequate to meet the demands of 4G LTE networks, operating at frequencies ranging from 600 MHz to 2.5 GHz. These dielectric properties are adequate to meet the demands of 5G networks, operating at frequencies up to 100 GHz.

The dielectric constant Dk and the dissipation factor Df are measured on a film of the polymer using a split cylinder resonator operating at 20 GHz and following the protocol of IPC-TM-650 2.5.5.13 titled *"Relative Permittivity and Loss Tangent Using a Split-Cylinder Resonator"* and edited by the IPC (International Printed Circuit organization).

This protocol provides a non-destructive measurement of the relative permittivity (Dk) and loss tangent (Df) of unclad dielectric substrates at microwave frequencies using a split cylinder resonator. See https://standards.globalspec.com/std/1024970/TM-650%202.5.5.13.

Dk and Df can more particularly be measured pursuant to protocol (p2) described in the Experimental Section.

### Polymer composition (PC)

The invention also relates to a polymer composition (PC) comprising at least one polymer (PEI) as defined herein and at least one additive selected from the group consisting of fillers (including reinforcing agents), tougheners, impact modifiers, reactive chain extenders, plasticizers, colorants, surfactants, pigments, antistatic agents, dyes, lubricants, thermal stabilizers, light and/or UV stabilizers, flame retardants, anti-drip agents, nucleating agents, dielectric modifiers and antioxidants.

The proportion of polymer(s) (PEI) in the polymer composition (PC) is generally between 40.0 and 100.0 wt%, this proportion being relative to the weight of the polymer composition (PC).

The polymer composition (PC) may comprise at least one filler. The filler may be selected from fibrous and particulate reinforcing agents.

The filler may generally be selected in the group consisting of inorganic fillers (such as talc, mica, kaolin, calcium carbonate, calcium silicate, magnesium carbonate), glass fibers, carbon fibers, synthetic polymeric fibers, aramid fibers, aluminum fibers, titanium fibers, magnesium fibers, boron carbide fibers, rock wool fibers, steel fibers and inosilicates (e.g. wollastonite).

Polymer composition (PC) may be prepared by bringing into contact polymer (PEI) and the other component(s) of polymer composition (PC). This can be performed after dissolving polymer (PEI) in a solvent and adding the component(s). Polymer composition (PC) may also be prepared by bringing into contact the poly(amic acid) which is formed in step (a) and the component(s) of the polymer composition (PC) before performing step (b) leading to polymer (PEI).

According to an embodiment (E*), polymer composition (PC) exhibits the following dielectric properties:
- Dk at 20 GHz ≤ 4.0, Dk being measured on a film made of polymer composition after drying in an oven at 100°C for 1 hour. In the same conditions, Dk is preferably ≤ 3.7, preferably ≤ 3.5; and/or
- Df at 20 GHz ≤ 0.0040, Df being measured on a film made of the polymer composition after drying in an oven at 100°C for 1 hour. In the same conditions, Df is preferably ≤ 0.0036.

Dk and Df are measured according to the conditions provided herein.

### Film of polymer (PEI) or of polymer composition (PC)

The polymer (PEI) of the invention or the polymer composition (PC) of the invention may be in the form of a film. Such a film is prepared by methods known by the skilled person, such as solution processing, film extrusion, injection molding, compression molding, thermoforming, or blow molding. The film may more particularly be prepared by solution processing, notably with the method disclosed in the Experimental Section.

The thickness of the film may be between 1.0 and 500.0 µm.

### Use of polymer (PEI) or of polymer composition (PC)

The polymer (PEI) of the invention and the polymer composition (PC) of the invention may be used in the preparation of a metal clad laminate (MCL).

The metal clad laminate (MCL) comprises at least one layer (L) made of or comprising the polymer (PEI) of the invention or the polymer composition (PC) of the invention and at least one metallic foil (L_{M}). Layer (L) has two sides, one or both of which may be bonded to (L_{M}).

The metal of (L_{M}) is usually copper, steel, aluminum, preferably copper.

The copper in (L_{M}) may be an annealed copper foil or an electrodeposited copper foil.

The metallic foil (L_{M}) has typically a thickness greater than 1 µm and/or less than 30 µm.

The metallic foil (L_{M}) may have one or both surfaces treated to alter the surface properties of the metal, such as surface roughness or chemical composition.

The copper foil has preferably a surface roughness (R_{ZJIS}) of less than 2.0 µm, being as defined in norm JPCA-UB-01. See also *"*Surface Roughness Evaluation of Copper foil for High Frequency PCB with Confocal Laser Scanning Microscope", The Fukuda-Giho, October 2021, The Fukuda-Giho, Shinya Nakata, Oct. 2021.

The copper foil and the metal clad laminate are typically flexible.

Since the film of polymer (PEI) exhibits low Dk and low Df, the metal clad laminate (MCL) exhibits also interesting dielectric properties, which is favorable for avoiding any power load and signal delay.

The metal clad laminate (MCL) may be prepared by a method comprising the step of putting into contact a solution comprising polymer (PEI) onto the surface of or a part of the surface of the metallic foil (L_{M}). Another method consists in putting into contact the reaction mixture obtained after step (a) disclosed below is poured on a surface and solvent (S) is removed, partly or totally and performing step (b) disclosed below.

The metal clad laminate may also be prepared by laminating one or both sides of the metallic foil (L_{M}) to the polymer composition (PC) of the invention or polymer (PEI) of the invention in the form of a film through the means of applying elevated temperature and pressure, such as in a press or by passing through temperature-controlled rollers.

### Method of preparation of polymer (PEI)

Polymer (PEI) is prepared by a method comprising step (a) where the monomers of polymer (PEI) are brought into contact and allowed to react to yield a poly(amic acid); step (b) where the poly(amid acid) is heated to yield the polymer (PEI).

General details about the method can be found in *"*Chapter 1 - POLYIMIDES: chemistry & structure property relationships literature review", 1999, Varun Ratta (https://vtechworks.lib.vt.edu/server/api/core/bitstreams/2cec68bf-24be-4fe8-a030-742724d09a4e/content).

### Step (a)

The monomers of polymer (PEI) including all dianhydrides of the dianhydride component (a) and all diamines of the diamine component (b) are brought into contact and allowed to react to yield a poly(amic acid).

In step (a), the monomers are typically present in a dipolar aprotic solvent (S), notably selected in the group consisting of *N,N'*-dimethylformamide (DMF), dimethylacetamide (DMAc), *N*-methylpyrrolidone (NMP), dimethyl sulfoxide (NMP), 1,3-dimethyl-2-imidazolidinone (DMI), gamma-butyrolactone, *gamma-*valerolactone, diethyleneglycol diethyl ether, methyl ethyl ketone (MEK), 1,2-dimethoxyethane (monoglyme), diethylene glycol dimethyl ether (diglyme), 1,2-bis(2-methoxyethoxy)ethane (triglyme), tetrahydrofuran (THF) and combination thereof. Solvent (S) is more particularly selected in the group consisting of NMP, DMF, DMAc and combination thereof.

Step (a) is preferably performed by adding the diamine component (b) to a solution of the dianhydride component (a) in solvent (S).

The proportion of monomers is such that the molar ratio (anhydride) / (NH₂) is between 0.8 and 1.2, preferably between 0.9 and 1.1, even more preferably between 0.95 and 1.05, wherein (anhydride) designates the total amount of anhydride groups present in the monomers of the dianhydride component (a) and (NH₂) designates the total amount of NH₂ groups present in the monomers of the diamine component (b).

Step (a) is generally performed at a temperature lower than 30°C.

The conditions used in the Experimental Section for step (a) can be followed.

### Step (b)

In step (b), the poly(amid acid) is heated to yield the polymer (PEI). Step (b) can be referred to as a *"curing step"* and aims at increasing the proportion of the imide groups. The degree of imidization can be followed by IRTF (Fourier-transform infrared spectroscopy).

Step (b) is typically performed at a temperature which is at least 200°C.

Step (b) is preferably performed after removing, partly or totally, solvent (S).

A temperature profile may be applied to increase the temperature from 200°C to a higher temperature to increase the proportion of imide groups.

The conditions used in the Experimental Section for step (b) can be followed.

According to an embodiment, it is possible to prepare a film of polymer (PEI) where before step (b), the reaction mixture obtained after step (a) is poured on a surface (*e.g.* glass) and solvent (S) is removed, partly or totally. After step (b), the film can be detached from the surface.

### [EXPERIMENTAL SECTION]

The conditions disclosed in the Experimental Section may conveniently be used for the preparation of the polymer (PEI) and films comprising polymer (PEI) and for measuring the properties of the polymer and of the polymer composition of the invention.

### Measurement of the glass transition temperature (Tg) by DMA

### Protocol (p1) used:

| |
|---|
| Dynamic mechanical analysis (DMA) was performed according to ASTM E1640-23 using a rheometer equipped with a linear film tension clamp operating in tension mode. A film is subjected to a temperature ramp of 10 °C/min from 30°C to 400 °C with a strain of 0.1 % and a frequency of 10 Hz. Tg is reported as the maximum in the semi logarithmic plot of tan δ as a function of frequency, corresponding to the step-change in the storage modulus (G'), as visualized in a logarithmic plot of G' as a function of frequency with units of rad/s. For clarity, where multiple step-changes in G' are observed, the peak in tan δ corresponding to the lowest temperature G' step-change is reported as the Tg. |

Protocol (p1) was performed with an ARES G2 rheometer (TA Instruments) and with the following specific conditions: the films were cut to approximately 25 mm height x 12 mm width and loaded into the fixture per the manufacturer's instructions. The gap between the tension clamps was set to 10 mm with an initial axial force of 1 N.

The maximum is calculated with the Trios^{®} software.

### Measurement of the dielectric properties

### Protocol (p2) used:

| |
|---|
| Dk and Df were measured on films prepared using the procedure described in Example 1 or Comparative Example 1 at 20 GHz, following IPC-TM-650 2.5.5.13. |
| The dielectric properties were measured after drying the films in an oven at 100 °C for 1 h using a 20 GHz split cylinder resonator (SCR). |

### Comparative Example 1 (CE1)

An oven-dried 100 mL, 3-neck round bottom flask equipped with a stir bearing and a glass hose barb adapter was placed under an atmosphere of nitrogen via constant nitrogen flow through the flask and out of a mineral oil bubbler. A ground glass stir rod with a PTFE paddle was inserted into the stir bearing annulus and connected to an electric stir motor. TAHQ (TCI, 5.42 g, 0.0118 mol) was charged under a nitrogen atmosphere. *N*-methyl-2-pyrrolidone (Honeywell, NMP) (31 g), dried over 4 Å molecular sieves, was charged to the flask and stirred to give a slurry of TAHQ in NMP. The TAHQ/NMP slurry was cooled to approximately 0 °C by submerging the round bottom flask in an ice bath. *m*-tolidine (TCI, 2.51 g, 0.0118 mol) was added portion-wise, in three parts, followed by NMP (14 g) in one part, to give a clear yellow/orange, viscous solution. The solution was allowed to warm to room temperature naturally, with constant stirring, under nitrogen flow. After 18 h the room temperature solution was poured onto a glass pane and spread into a film using a 40 mil (1,000 micron) thickness, beveled square frame (BYK). The resulting film was dried for 1-2 h at 75 °C under nitrogen flow. The resulting clear, yellow film was delaminated from the glass substrate, and taped down to a piece of glass-backed Kapton^{®}. The film was then heated under a nitrogen atmosphere using the following temperature profile: heat from 75 to 220 °C at 2 °C/min, then to 310 °C at 3 °C/min, soak for 1 h at 310 °C. The resulting film was removed from the Kapton^{®} and used for testing "as-is".

### Example 1 (E1) - Representative procedure for the preparation of polymer (PEI) of the invention

An oven-dried 100 mL, 3-neck round bottom flask equipped with a stir bearing and a glass hose barb adapter was placed under an atmosphere of nitrogen via constant nitrogen flow through the flask and out of a mineral oil bubbler. A ground glass stir rod with a PTFE paddle was inserted into the stir bearing annulus and connected to an electric stir motor. TAHQ (TCI, 5.03 g, 0.0110 mol) and BTDA (0.88 g, 0.0027 mol) were charged under a nitrogen atmosphere. N-methyl-2-pyrrolidone (Honeywell, NMP) (31 g), dried over 4 Å molecular sieves, was charged to the flask and stirred to give a slurry of TAHQ in NMP. The TAHQ slurry was cooled to 0 °C by submerging the round bottom flask in an ice bath. *m*-tolidine (TCI, 2.51 g, 0.0118 mol) was added portion-wise in three parts, followed by NMP (19 g) in one part, to give a clear yellow/orange, viscous solution. The solution was allowed to warm to room temperature naturally, with constant stirring, under nitrogen flow. After 18 h the room temperature solution was poured onto a glass pane and spread into a film using a 30 mil (800 micron) thickness, beveled square frame (BYK). The resulting film was dried for 1 h at 75 °C under nitrogen flow. The resulting clear, yellow film was delaminated from the glass substrate, and taped down to a piece of glass-backed Kapton^{®}. The film was then heated under a nitrogen atmosphere using the following temperature profile: heat from 75 to 220 °C at 2 °C/min, then to 310 °C at 3 °C/min, soak for 1 h at 310 °C. The resulting film was removed from the Kapton^{®} and used for testing "as-is".

This recipe was used also for the preparation of the polymers of examples E2-E8 where the diamine component (b) was added to the dianhydride component (b)

As can be seen with the results disclosed in Table I below, the poly(ester-imide) (PEI) of the invention exhibits a high Tg of at least 280.0°C and low Df/Dk (notably Df ≤ 3.70 and Dk ≤ 3.6×10⁻³). Moreover, in comparison to CE4 or CE5, the PEI of the invention exhibits a low Tm or no Tm at all.

**Table I**

| **Ex.** | | **CE1** | **CE2** | **CE3** | **CE4** | **CE5** | **CE6** | **CE7** | **E1** | **E2** | **E5** | **E6** | **E7** | **E8** |
|---|---|---|---|---|---|---|---|---|---|---|---|---|---|---|
| Dianhydride component (a) (in mol%) | TAHQ (DI1) | 100 | 80 | 80 | 100 | | | 100 | 80 | 80 | 75 | 70 | 80 | 30 |
| | BTDA (DI2a) | | 20 | 20 | | 20 | 100 | | 20 | 20 | 20 | 20 | 10 | 50 |
| | PMDA (DI2b) | | | | | 80 | | | | | 5 | 10 | 10 | 20 |
| Diamine component (b) (in mol%) | m-tolidine (DA1) | 100 | 50 | 30 | | 100 | 100 | 70 | 100 | 70 | 100 | 100 | 100 | 100 |
| | 4,4'-ODA (DA2) | | 50 | 70 | 100 | | | 30 | | 30 | | | | |
| Tg (°C) | DMA | 278 | 276 | 266 | 242 | 428 | 410 | 263 | 291 | 283 | 290 | 289 | 340 | 322 |
| Tm (first heat) (°C) | DSC | 336.7 | 342.4 | 330.7 | 388.7 | 341.0 | * | 336.0 | * | * | 326.5 | 328.2 | * | 259.5 |
| Tc (first cool) (°C) | DSC | | | | 303.0 | | | | | | | | | 202.1 |
| Dielectric constant (20 GHz) | | 3.14 | 4.61 | 3.16 | 3.77 | 3.71 | 3.15 | 3.21 | 4.61 | 3.09 | 3.22 | 3.68 | 3.25 | 3.06 |
| Dielectric loss tangent (20 GHz) x10³ | | 1.9 | 2.4 | 2.9 | 2.6 | 2.7 | 4.2 | 4.4 | 2.4 | 2.2 | 2.3 | 3.5 | 2.2 | 2.4 |
| Evaluation of the viscosity | | Med | Med | Med | High | Low | Low | High | Med | Low | Low | Med | High | Low |

| | | | | | | | | | | | | | | |
|---|---|---|---|---|---|---|---|---|---|---|---|---|---|---|
| Tc: crystallization temperature; Tm: melting temperature; *: no Tm observed | | | | | | | | | | | | | | |

## Claims

**1.** Polymer (PEI) comprising at least 90.0 mol%, preferably at least 95.0 mol%, this proportion in mol% being relative to the total number of recurring units in the polymer, of recurring units (R_{PEI}), formed by reaction of the dianhydrides of the dianhydride component (a) and of the diamines of the diamine component (b) followed by imidization, where
- the dianhydride component (a) consists essentially of or consists of between 28.0 mol% and 82.0 mol% of the dianhydride (DI1) of formula 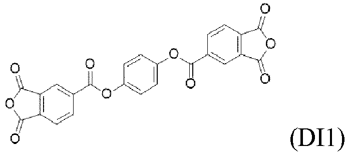 and between 18.0 mol% and 72.0 mol% of dianhydride (DI2) selected in the group consisting of the dianhydride (DI2a), dianhydride (DI2b) and a combination thereof: 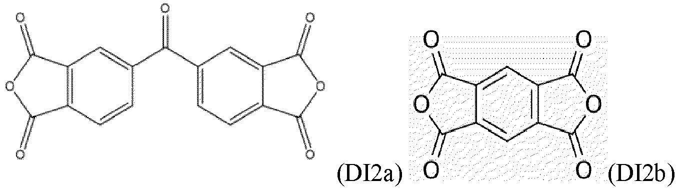 these proportions in mol% being given relative to the total proportion dianhydrides in the dianhydride component (a); and
- the diamine component (b) consists essentially of or consists of between 68.0 mol% and 100 mol% diamine (DA1) of formula 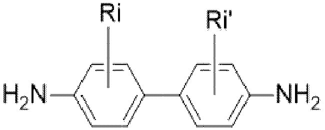 where R is a substituent selected in the groups of C₁-C₁₀ alkyl groups and i an i' are integers between 0 and 4 such that i+i' is at least 2 and between 0 and 32.0 mol% of diamine (DA2) of formula 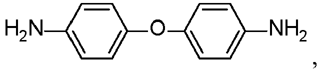 these proportions in mol% being given relative to the total proportion diamines in the diamine component (b).

**2.** Polymer (PEI) according to claim 1, comprising at least 90.0 mol%, preferably at least 95.0 mol%, this proportion in mol% being relative to the total number of recurring units in the polymer, of recurring units (R_{PEI}), formed by reaction of the dianhydrides of the dianhydride component (a) and of the diamines of the diamine component (b) followed by imidization, where
- the dianhydride component (a) consists essentially of or consists of between 68.0 mol% and 82.0 mol% of the dianhydride (DI1) of formula 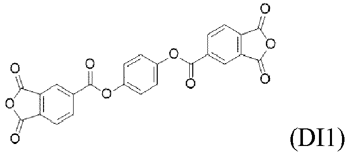 and between 18.0 mol% and 32.0 mol% of dianhydride (DI2) selected in the group consisting of the dianhydride (DI2a), dianhydride (DI2b) and a combination thereof: 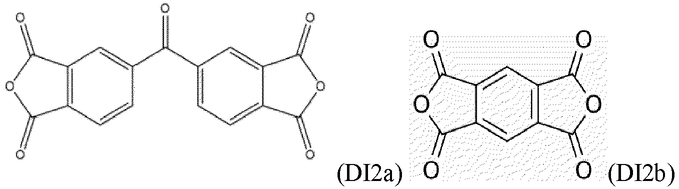 where these proportions in mol% are given relative to the total proportion dianhydrides in the dianhydride component (a) and where the expression *"consist essentially"* in relation to the dianhydride component (a) means that the dianhydride component consists of dianhydrides DI1 and DI2 and may also contain a dianhydride other than DI1 and DI2 with a proportion lower than or equal to 1.0 mol% (≤ 1.0 mol%); and
- the diamine component (b) consists essentially of or consists of between 68.0 mol% and 100 mol% diamine (DA1) of formula 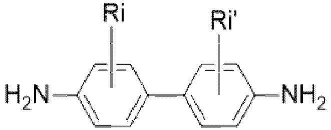 where R is a substituent selected in the groups of C₁-C₁₀ alkyl groups and i an i' are integers between 0 and 4 such that i+i' is at least 2 and between 0 and 32.0 mol% of diamine (DA2) of formula 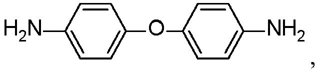 where these proportions in mol% are given relative to the total proportion diamines in the diamine component (b) and where the expression *"consist essentially"* in relation to the diamine component (b) means that the diamine component consists of diamines DA1 and DA2 and may also contain a diamine other than DA1 and DA2 with a proportion lower than or equal to 2.0 mol%, preferably lower than or equal to 1.5 mol% (<_ 1.5 mol%), preferably lower than or equal to 1.0 mol% (<_ 1.0 mol%), preferably lower than or equal to 0.5 mol% (<_ 0.5 mol%).

**3.** Polymer (PEI) according to claim 1 or 2, comprising the following recurring units (R_{PEI 1}), (R_{PEI 2}), (R_{PEI 3}) and (R_{PEI 4}) which are linked to one another by the imide bonds:
• 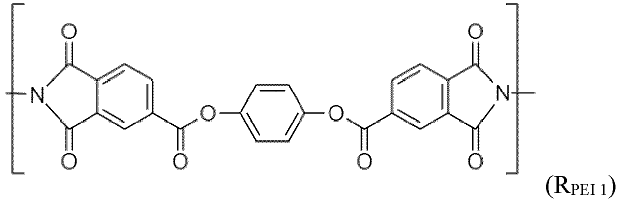
• (R_{PEI 2}) selected in the group consisting of the units of formula (R_{PEI 2a}) with X= C(=O), (R_{PEI 2b}) and combination thereof; 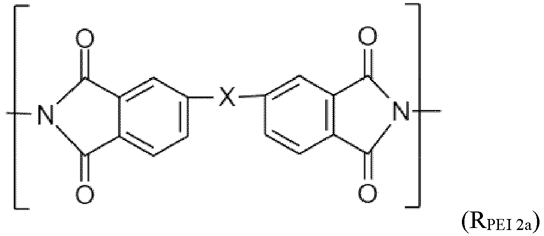 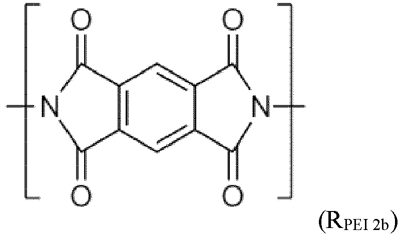
• 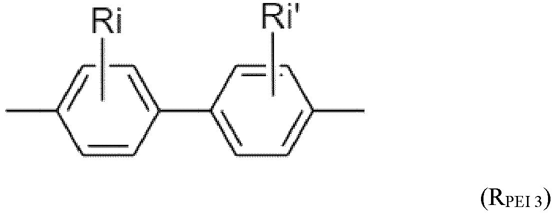
• 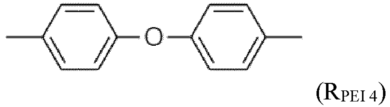
where the total proportion of recurring units (R_{PEI 1}), (R_{PEI 2}), (R_{PEI 3}) and (R_{PEI 4}) in polymer (PEI) is at least 90.0 mol%, preferably at least 95.0 mol%, this proportion in mol% being relative to the total number of recurring units in the polymer or where the recurring units of polymer (PEI) consist essentially of or consist of recurring units (R_{PEI 1}), (R_{PEI 2}), (R_{PEI 3}) and (R_{PEI 4}).

**4.** Polymer (PEI) according to any one of the preceding claims, wherein R is a substituent selected in the group of C₁-C₃ linear or branched alkyl groups, R being notably selected in the group consisting of methyl, ethyl and propyl and isomers thereof.

**5.** Polymer (PEI) according to any one of the preceding claims, wherein DA1 is of formula 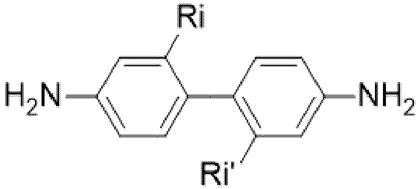 or is of formula 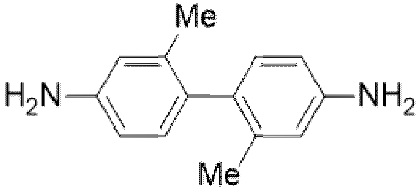 or recurring units (R_{PE3}) are derived from one these two monomers.

**7.** Polymer (PEI) according to any one of the preceding claims, wherein the diamine component (b) consists essentially of or consists of diamine (DA1) of formula 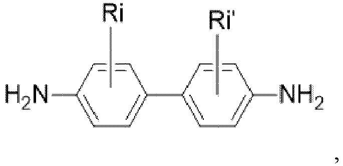 where the expression *"consist essentially"* in relation to the diamine component (b) means that the diamine component consists of DA1 and may also contain a diamine other than DA1 with a proportion lower than or equal to 2.0 mol%, preferably lower than or equal to 1.5 mol% (<_ 1.5 mol%), preferably lower than or equal to 1.0 mol% (<_ 1.0 mol%), preferably lower than or equal to 0.5 mol% (<_ 0.5 mol%).

**8.** Polymer (PEI) according to any one of the preceding claims, exhibiting a glass transition temperature (Tg) of at least 280.0°C or between 280.0°C and 380.0°C or between 280.0°C and 350.0°C, Tg being measured by dynamic mechanical analysis ("DMA") according to ASTM E1640-23, notably using a heating and cooling rate of 10°C/min, at a frequency of 10 Hz, with an oscillatory strain of 0.1 %, more particularly according to protocol (p1) described in the Experimental Section.

**9.** Polymer (PEI) according to any one of the preceding claims, wherein polymer (PEI) is in the form of a film.

**10.** Polymer (PEI) according to any one of the preceding claims, exhibiting:
- a Dk at 20 GHz ≤ 4.0, Dk being measured on a film made of polymer (PEI) after drying in an oven at 100°C for 1 hour, Dk being preferably ≤ 3.7, preferably ≤ 3.5; and/or
- a Df at 20 GHz ≤ 0.0040, Df being measured on a film made of polymer (PEI) after drying in an oven at 100°C for 1 hour, Df being preferably ≤ 0.0036,
where Dk and Df are measured on a film of the polymer (PEI) using a split cylinder resonator operating at 20 GHz and following the protocol of IPC-TM-650 2.5.5.13 titled *"Relative Permittivity and Loss Tangent Using a Split-Cylinder Resonator"* and edited by the IPC (International Printed Circuit organization), notably according to protocol (p2).

**11.** Polymer (PEI) according to any one of the preceding claims, prepared by a method comprising step (a) where the monomers of polymer (PEI) are brought into contact and allowed to react to yield a poly(amic acid); step (b) where the poly(amid acid) is heated to yield the polymer (PEI).

**12.** Polymer composition (PC) comprising at least one polymer (PEI) as defined in any one of claims 1-11 and at least one additive selected from the group consisting of fillers, tougheners, impact modifiers, reactive chain extenders, plasticizers, colorants, surfactants, pigments, antistatic agents, dyes, lubricants, thermal stabilizers, light and/or UV stabilizers, flame retardants, anti-drip agents, nucleating agents, dielectric modifiers and antioxidants.

**13.** Polymer composition (PC) according to claim 12, exhibiting:
- a Dk at 20 GHz ≤ 4.0, Dk being measured on a film made of polymer (PEI) after drying in an oven at 100°C for 1 hour, Dk being preferably ≤ 3.7, preferably ≤ 3.5; and/or
- a Df at 20 GHz ≤ 0.0040, Df being measured on a film made of polymer (PEI) after drying in an oven at 100°C for 1 hour, Df being preferably ≤ 0.0036,
where Dk and Df are measured on a film of the polymer composition (PC) using a split cylinder resonator operating at 20 GHz and following the protocol of IPC-TM-650 2.5.5.13 titled *"Relative Permittivity and Loss Tangent Using a Split-Cylinder Resonator"* and edited by the IPC (International Printed Circuit organization), notably according to protocol (p2).

**14.** Metal clad laminate (MCL) comprises at least one layer (L) made of or comprising the polymer (PEI) as defined in any one of claims 1-11 or the polymer composition (PC) as defined in claim 12 or 13 and at least one metallic foil (L_{M}), the metal of (LM) being notably copper, steel, aluminum, preferably copper.

**15.** Use of the metal clad laminate (MCL) of claim 13 or 14 in an electronic device, notably an electronic device capable of telecommunication.
